# EUROPÄISCHE PATENTSCHRIFT

(11) **EP 1 389 046 B1**
(45) Veröffentlichungstag und Bekanntmachung des Hinweises auf die Patenterteilung: **06.12.2006**
(21) Anmeldenummer: 02742750.9
(22) Anmeldetag: 15.05.2002
(51) Int. Cl.: A22C 25/17, A22B 5/16

(54) **VORRICHTUNG ZUM ABSCHWARTEN UND ENTHÄUTEN VON BEHANDLUNGSGUT**
DEVICE FOR DE-RINDING AND SKINNING A PRODUCT TO BE TREATED
DISPOSITIF PERMETTANT D'ECORCHER ET DE DEPOUILLER UN PRODUIT A TRAITER

(30) Priorität: 16.05.2001 DE 10125737
(43) Veröffentlichungstag der Anmeldung: 18.02.2004
(73) Patentinhaber: Maja-Maschinenfabrik Hermann Schill GmbH & Co. KG, 77694 Kehl-Goldscheuer (DE)
(72) Erfinder: SCHILL, Joachim, 77694 Kehl-Goldscheuer (DE)
(74) Vertreter: Lucht, Silvia
(86) Internationale Anmeldenummer: PCT/DE2002/001755
(87) Internationale Veröffentlichungsnummer: WO 2002/091842

(56) Entgegenhaltungen:
- DE-A- 1 454 072
- DE-A- 4 322 478
- DE-A- 19 517 939
- US-A- 4 958 409
- US-B1- 6 213 863

## Beschreibung

### Stand der Technik

Die Erfindung geht aus von einer Vorrichtung zum Abschwarten und Enthäuten von Behandlungsgut nach dem Oberbegriff des Anspruchs 1. Eine solche Vorrichtung ist aus US 62/3863 bekannt.

Derartige Vorrichtungen dienen dazu, von einem Behandlungsgut insbesondere von Fleisch oder Fischstücken unerwünschte Schichten wie beispielsweise Fett oder Haut abzutrennen. Hierzu wird das Behandlungsgut mit Hilfe einer Zugwalze erfasst und gegen das Schneidelement einer Schneideinheit gepresst. Bei dem Schneidelement handelt es sich beispielsweise um eine Klinge. Durch Rotation der Zugwalze wird das Behandlungsgut relativ zum Schneidelement bewegt und die unerwünschte Schicht von dem Behandlungsgut durch das Schneidelement abgetrennt. Eine zusätzliche Druckwalze dient dazu, das Behandlungsgut gegen die Schneideinheit zu pressen. Das vorwiegend flache Behandlungsgut wird durch die Zugwalze und die Druckwalze kontinuierlich über die Schneideinheit hinweg bewegt ohne sich dabei zu drehen. Derartige Vorrichtungen sind beispielsweise aus der EP 0 828 428 B1 und der DE 197 39 618 A1 bekannt.

Die bekannten Vorrichtungen haben den Nachteil, dass das Behandlungsgut nur von einer Seite enthäutet wird. Soll von beiden Seiten eine Enthäutung erfolgen, so muß das bereits enthäutete Behandlungsgut von einer Person gedreht und erneut in die Vorrichtung eingelegt werden. Eine derartige Vorgehensweise ist zeit- und kostenaufwendig.

### Die Erfindung und ihre Vorteile

Demgegenüber wird bei der erfindungsgemäßen Vorrichtung mit den kennzeichnenden Merkmalen des Anspruchs 1 das vorwiegend flache Behandlungsgut nach dem Enthäuten automatisch gewendet und auf der anderen Seite ebenfalls enthäutet. Hierzu ist unterhalb eines ersten Abfuhrbandes der ersten Enthäutungseinheit ein Wendeband vorgesehen. Dieses Wendeband kann seine Transportrichtung ändern. Es führt das Behandlungsgut einer zweiten Enthäutungseinheit zu. Außerdem ist das erste Abfuhrband zumindest abschnittsweise schwenkbar gelagert. Durch einen Antrieb kann die Neigung dieses Abschnittes eingestellt werden. Auf diese Weise ist der Abstand zwischen dem ersten Abfuhrband und dem Wendeband variabel. Die beiden Sensoren vor der ersten Enthäutungseinheit, welche die Dicke und die Länge des Behandlungsgutes erfassen, sind mit der Steuerung für den Antrieb der Neigung des ersten Abfuhrbandes verbunden. Dadurch wird der Abstand zwischen erstem Abfuhrband und Wendeband in Abhängigkeit von der Dicke und der Länge des Behandlungsgutes verändert. Auf diese Weise wird gewährleistet, dass das Wenden des Behandlungsgutes zuverlässig abläuft.

Die Arbeitsweise der Maschine besteht darin, dass das Behandlungsgut zunächst einer ersten Enthäutungseinheit zugeführt wird. Dabei wird das Behandlungsgut von einer rotierenden Zugwalze aufgenommen und der Enthäutungsklinge einer Schneideinheit zugeführt. Der federnd gelagerte Klingenbalken passt sich automatisch der Dicke der Haut an, so dass ein optimales Enthäutungsergebnis erzielt wird. Die abgetrennten Fett- und Hautreste, welche auch als Vlies bezeichnet werden, fallen nach unten. Über ein erstes Abfuhrband wird das enthäutete Behandlungsgut von der ersten Enthäutungseinheit weggeführt. Am Ende des ersten Abfuhrbandes fällt das Behandlungsgut auf das tiefer gelegene Wendeband. Zu diesem Zeitpunkt bewegt sich das Wendeband in die entgegengesetzte Transportrichtung wie das Abfuhrband. Erst wenn das Behandlungsgut vollständig auf dem Wendeband aufliegt, ändert sich dessen Transportrichtung. Das Behandlungsgut wird nun in dieselbe Richtung transportiert wie durch das erste Abfuhrband. Durch das nach unten Fallen und die entgegengesetzte Transportrichtung des Wendebandes wird das Behandlungsgut gewendet. Anschließend wird das Behandlungsgut durch das Wendeband einer zweiten Enthäutungseinheit zugeführt. Eine zweite rotierende Zugwalze erfasst das Behandlungsgut und führt es einer federnd gelagerten zweiten Enthäutungsklinge zu. Die von der zweiten Seite abgetrennten Fett- und Hautreste fallen ebenfalls nach unten.

Durch die Vorrichtung erfolgt das Enthäuten und Abschwarten des vorwiegend flachen Behandlungsgutes von beiden Seiten. Das manuelle Wenden durch eine Bedienungsperson entfällt. Die Bearbeitung ist darüber hinaus schneller als bei einem manuellen Wenden.

Nach einer vorteilhaften Ausgestaltung der Erfindung sind vor der ersten Enthäutungseinheit ein Zufuhrband und nach der zweiten Enthäutungseinheit ein zweites Abfuhrband vorgesehen. Auf diese Weise wird das Behandlungsgut automatisch der Bearbeitung zugeführt und nach der Bearbeitung abgeleitet. Für das Zufuhrband, das erste Abfuhrband, das Wendeband und das zweite Abfuhrband sind Antriebe vorgesehen, die die Geschwindigkeit der Bänder vorgeben. Dabei nimmt die Geschwindigkeit in Bearbeitungsrichtung gesehen von Band zu Band zu. Die Geschwindigkeit des Zufuhrbands ist am geringsten, die des zweiten Abfuhrbands am größten. Dadurch wird verhindert, dass das Behandlungsgut auf einem der Bänder zusammengeschoben oder gefaltet wird. Durch die zunehmende Geschwindigkeit liegt das Behandlungsgut stets flach und glatt auf den Bändern auf.

Nach einer weiteren vorteilhaften Ausgestaltung der Erfindung ist an dem Wendeband ein Sensor vorgesehen, der die Länge des Behandlungsgutes erfaßt. Der Sensor erkennt, wenn das Behandlungsgut vollständig auf dem Wendeband aufliegt. Der Sensor ist mit einer Steuerung für den Antrieb des Wendebandes verbunden. Er sorgt dafür, dass sich die Transportrichtung des Wendebandes automatisch umkehrt, wenn das Behandlungsgut vollständig auf dem Wendeband aufliegt.

Nach einer weiteren vorteilhaften Ausgestaltung der Erfindung sind vor der ersten Enthäutungseinheit ein Sensor zur Erkennung der Länge und ein Sensor zur Erkennung der Dicke des Behandlungsgutes vorgesehen. Der Sensor zur Erkennung der Länge ist mit einer Steuerung für den Antrieb des Zufuhrbandes verbunden. Auf diese Weise wird erreicht, dass das Zufuhrband stehen bleibt, wenn das Behandlungsgut durch die erste Enthäutungseinheit erfasst ist. Dadurch kann kein weiteres Behandlungsgut der ersten Enthäutungseinheit zugeführt werden, bis das Behandlungsgut die erste Enthäutungseinheit verlässt. Das Zufuhrband läuft entweder nach einer vorgegebenen Zeiteinheit oder bei Erkennung des Behandlungsgutes durch den Sensor an dem Wendeband wieder an.

Nach einer weiteren vorteilhaften Ausgestaltung der Erfindung ist bei der ersten und/ oder der zweiten Enthäutungseinheit eine Druckwalze vorgesehen, welche das Behandlungsgut von oben an die Schneideinheit andrückt. Ein Antrieb stellt die Höhe der Druckwalze über der Schneideinheit in Abhängigkeit von der durch einen Sensor vor der Enthäutungseinheit erkannten Dicke des Behandlungsgutes ein. Dadurch wird der Druck, mit dem die Druckwalze das Behandlungsgut an die Schneideinheit anpresst, an das jeweilige Behandlungsgut angepasst.

Nach einer weiteren vorteilhaften Ausgestaltung der Erfindung sind das Wendeband und das zweite Abfuhrband gegenüber der Horizontalen geneigt. Auf diese Weise ist das Niveau des Zufuhrbandes und des Endes des zweiten Abfuhrbandes zumindest nahezu identisch. Wird das Behandlungsgut durch das zweite Abfuhrband einer weiteren Bearbeitung durch Maschinen zugeführt, so muß das Niveau dieser Maschinen nicht speziell an die Vorrichtung zum Abschwarten und Enthäuten angepasst werden.

Nach einer weiteren vorteilhaften Ausgestaltung der Erfindung werden die nach unten fallenden Fett- und Hautreste entweder durch Behälter oder durch ein Transportband aufgenommen. Dies erleichtert die Entnahme des Vlieses aus der Vorrichtung.

Weitere Vorteile und vorteilhafte Ausgestaltungen der Erfindung sind der nachfolgenden Beschreibung, der Zeichnung und den Ansprüchen entnehmbar.

### Zeichnung

Ein Ausführungsbeispiel des Gegenstandes der Erfindung ist in den Zeichnungen dargestellt und im folgenden näher beschrieben. Es zeigen:
- Figur 1: Vorrichtung zum Abschwarten und Enthäuten in einer Seitenansicht bei geöffnetem Gehäuse,
- Figur 2: Vorrichtung gemäß Figur 1 in einer Seitenansicht und in einer Ansicht von vorne mit zwei Transportbändern für das Vlies,
- Figur 3: Vorrichtung gemäß Figur 1 in einer Seitenansicht und in einer Ansicht von vorne mit einem durchgehenden Transportband für das Vlies,
- Figur 4: Vorrichtung gemäß Figur 1 in einer Seitenansicht und in einer Ansicht von vorne mit einem Transportband und einem Sammelbehälter für das Vlies.

### Beschreibung der Ausführungsbeispiele

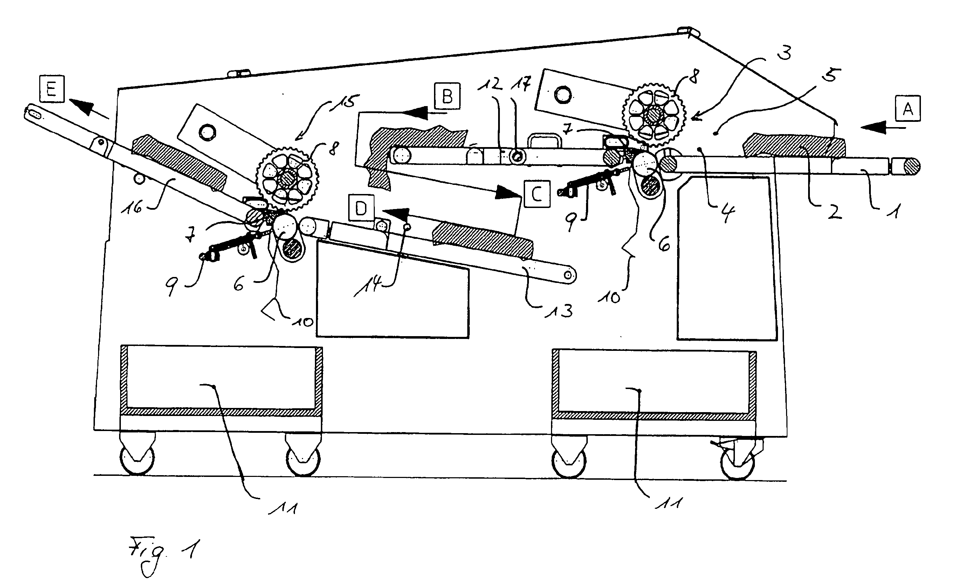

Figur 1 zeigt in einer Seitenansicht eine Vorrichtung zum Abschwarten und Enthäuten. Über ein Zufuhrband 1 wird ein Fleischstück 2 einer ersten Enthäutungseinheit 3 zugeführt. Durch die beiden Lichtschranken 4 und 5 wird die Länge und die Dicke des Fleischstücks erkannt. Wenn das Fleischstück die Lichtschranke 4 vollständig passiert hat, bleibt das Zufuhrband 1 stehen. Damit kann kein weiteres Fleischstück der ersten Enthäutungseinheit 3 zugeführt werden. Das Fleischstück 2 wird nun von der rotierenden Zugwalze 6 erfaßt und der Enthäutungsklinge der Schneideinheit 7 zugeführt. Eine Druckwalze 8 sorgt dafür, dass das Fleischstück von oben gegen die Schneideinheit 7 gedrückt wird. Durch eine Druckluftvorrichtung 9 werden Fleischteile, die an der Zugwalze 6 haften, entfernt. Die durch die Schneideinheit abgetrennten Fett- und Hautreste 10 fallen nach unten in einen Sammelbehälter 11. Das an der Unterseite enthäutete Fleischstück 2 wird durch das erste Abfuhrband 12 von der ersten Enthäutungseinheit 3 weggeführt. Die Transportrichtung des Zufuhrbandes 1 und des ersten Abfuhrbandes 12 ist durch die Pfeile A und B in Figur 1 angegeben. Am Ende des ersten Abfuhrbandes 12 fällt das Fleischstück 2 nach unten auf das Wendeband 13. Zu diesem Zeitpunkt bewegt sich das Wendeband in die entgegengesetzte Transportrichtung wie das erste Abfuhrband 12. Diese Transportrichtung ist durch den Pfeil C in Figur 1 angegeben. Durch die entgegengesetzten Transportrichtungen von erstem Abfuhrband 12 und Wendeband 13 wird das Fleischstück beim Fallen auf das tiefer gelegene Wendeband gewendet. Eine Lichtschranke 14 erkennt, wenn das Fleischstück 2 vollständig die Lichtschranke passiert hat und damit auf dem Wendeband aufliegt. Anschließend wird die Transportrichtung des Wendebandes 13 geändert. Dies ist durch den Pfeil D in Figur 1 angegeben. Dadurch wird das Fleischstück einer zweiten Enthäutungseinheit 15 zugeführt. Diese stimmt in ihrem Aufbau mit der ersten Enthäutungseinheit 3 überein. Sie weist ebenfalls eine Zugwalze 6, eine Schneideinheit 7, eine Druckwalze 8, eine Druckluftvorrichtung 9 und einen Sammelbehälter 11 für die abgetrennten Fett- und Hautreste 10 auf. Das Fleischstück 2 wird nun an der noch nicht bearbeiteten Seite enthäutet und über ein zweites Abfuhrband 16 aus der Vorrichtung befördert.

Das erste Abfuhrband 12 weist ein Gelenk 17 auf, so dass der der ersten Enthäutungseinheit 3 abgewandte Abschnitt in seiner Neigung verstellt werden kann. Der zugehörige Antrieb ist in der Zeichnung nicht dargestellt. Auf diese Weise kann in Abhängigkeit von der durch die Lichtschranken 4 und 5 erkannten Länge und der Dicke des Fleischstücks der Abstand zwischen dem hinteren Ende des ersten Abfuhrbandes 12 und dem Wendeband 13 variiert werden.

Während das Zufuhrband 1 und das erste Abfuhrband 12 mit Ausnahme des neigbaren Abschnitts des ersten Abfuhrbandes horizontal angeordnet sind, haben das Wendeband 13 und das zweite Abfuhrband 16 einen gegenüber der Horizontalen geneigten Verlauf. Auf diese Weise wird erreicht, dass die Ausgabe des bearbeiteten Fleischstücks 2 auf demselben Niveau wie die Eingabe des Fleischstücks in die Vorrichtung erfolgt. Durch diese Anordnung wird außerdem eine relativ kleine und kompakte Bauweise der Vorrichtung erzielt.

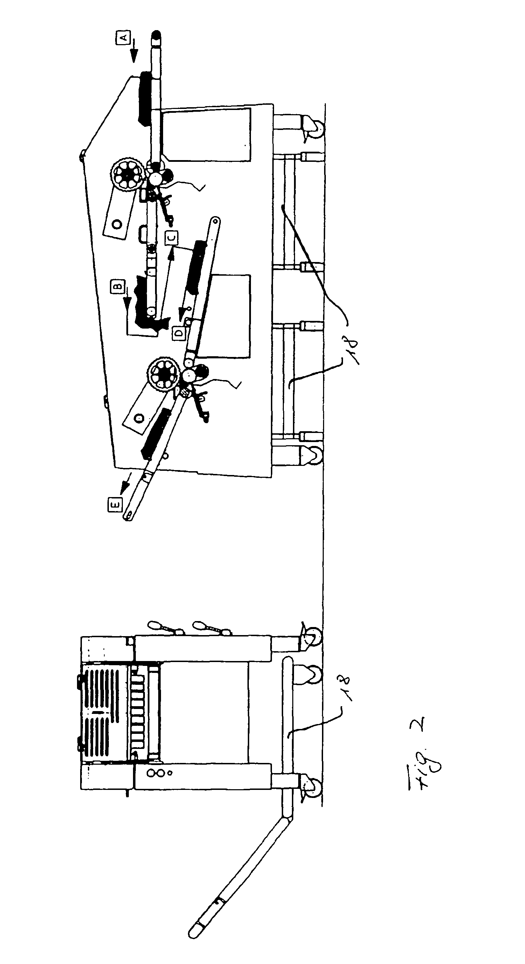

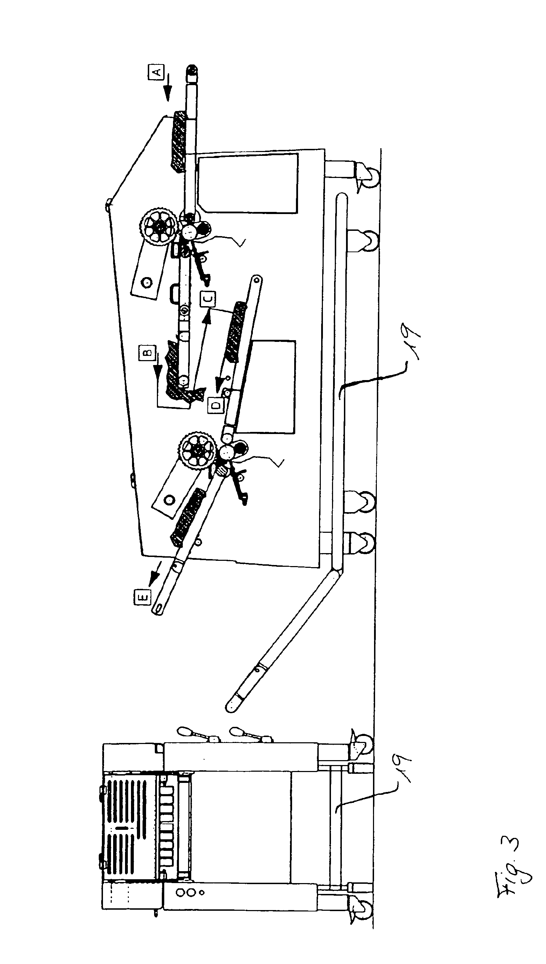

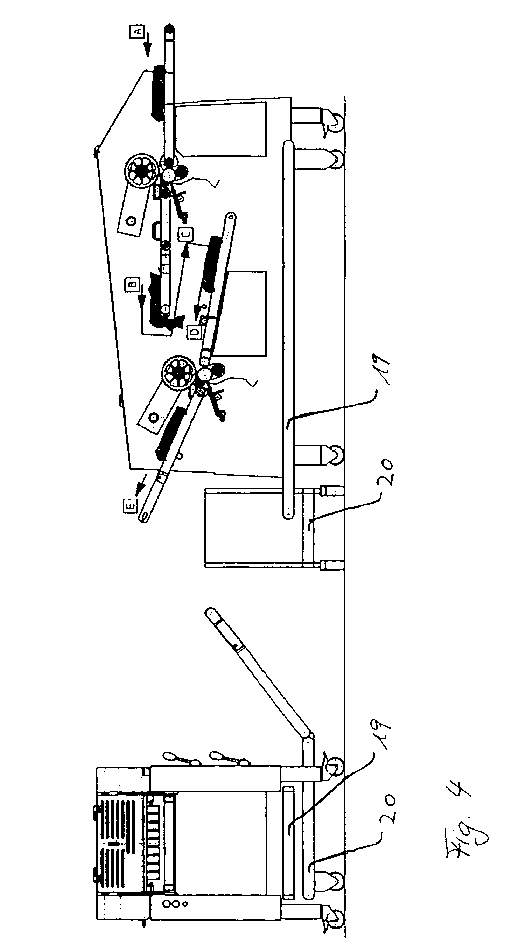

Die in den Figuren 2, 3 und 4 dargestellten Vorrichtungen stimmen in ihrem Aufbau mit der in Figur 1 dargestellten Vorrichtung überein. Sie unterscheiden sich lediglich durch unterschiedliche Transportbänder für die abgetrennten Fett- und Hautreste bzw. das Vlies von der in Figur 1 dargestellten Vorrichtung. Die Vorrichtung gemäß Figur 2 weist anstelle zweier Sammelbehälter 11 zwei Transportbänder 18 für das Vlies auf. Die Transportrichtung dieser Bänder verläuft senkrecht zur Bearbeitungsrichtung des Behandlungsgutes. Außerhalb der Vorrichtung zum Abschwarten und Enthäuten verläuft das Transportband mit einer Neigung nach oben. Von dem Ende des Transportbandes kann das Vlies beispielsweise in einen Sammelbehälter fallen. Bei der Vorrichtung gemäß Figur 3 ist ein durchgehendes Transportband 19 für das Vlies vorgesehen, welches dieselbe Transportrichtung wie das Zufuhrband, das Wendeband und die Abfuhrbänder aufweist. Bei der Vorrichtung gemäß Figur 4 sind ein Transportband 19 längs zur Bearbeitungsrichtung und ein Transportband 20 quer zur Bearbeitungsrichtung vorgesehen.

Sämtliche Merkmale der Erfindung können sowohl einzeln als auch in beliebiger Kombination miteinander erfindungswesentlich sein.

### Bezugszahlenliste

- 1: Zufuhrband
- 2: Fleischstück
- 3: erste Enthäutungseinheit
- 4: Lichtschranke für die Länge des Fleischstücks
- 5: Lichtschranke für die Dicke des Fleischstücks
- 6: Zugwalze
- 7: Schneideinheit
- 8: Druckwalze
- 9: Druckluftvorrichtung
- 10: Fett- und Hautreste
- 11: Sammelbehälter
- 12: erstes Abfuhrband
- 13: Wendeband
- 14: Lichtschranke
- 15: zweite Enthäutungseinheit
- 16: zweites Abfuhrband
- 17: Gelenk
- 18: Transportband für das Vlies
- 19: Transportband für das Vlies
- 20: Transportband für das Vlies

## Patentansprüche

1. Vorrichtung zum Enthäuten und Abschwarten von Behandlungsgut wie Fleisch- , Fischstücke oder dergleichen,
mit einer ersten Enthäutungseinheit (3) bestehend aus einer Schneideinheit (7),
einer das Behandlungsgut der Schneideinheit (7) zuführenden Zugwalze (6),
und mit einer Transporteinheit bestehend aus
einem ersten Abfuhrband (12) zum Ableiten des durch die erste Enthäutungseinheit (3) enthäuteten Behandlungsgutes (2),
**dadurch gekennzeichnet,**
**dass** unterhalb des ersten Abfuhrbandes (12) ein Wendeband (13) vorgesehen ist, auf das das Behandlungsgut (2) von dem der ersten Enthäutungseinheit (3) abgewandten Ende des ersten Abfuhrbandes (12) fallen kann,
**dass** ein Antrieb des Wendebandes (13) vorgesehen ist, der das Behandlungsgut (2) zunächst in eine der Transportrichtung (B) des ersten Abfuhrbandes (12) entgegengesetzte erste Richtung (C) und anschließend in eine mit der Transportrichtung des Abfuhrbands übereinstimmende zweite Richtung (D) transportiert,
**dass** an dem in zweiter Richtung (D) gesehenen Ende des Wendebandes (13) eine zweite Enthäutungseinheit (15) vorgesehen ist, und
**dass** zumindest ein Abschnitt des ersten Abfuhrbands (12) schwenkbar gelagert ist zur Änderung der Neigung dieses Abfuhrbandabschnittes.

2. Vorrichtung nach Anspruch 1, **dadurch gekennzeichnet, dass** ein das Behandlungsgut (2) der ersten Enthäutungseinheit (3) zuführendes Zufuhrband (1) vorgesehen ist, und
dass ein das Behandlungsgut (2) von der zweiten Enthäutungseinheit (15) wegführendes zweites Abfuhrband (16) vorgesehen ist.

3. Vorrichtung nach Anspruch 1 oder 2, **dadurch gekennzeichnet, dass** an dem Wendeband (13) ein Sensor (14) vorgesehen ist, der das Passieren des Behandlungsgutes (2) registriert, und dass der Sensor (14) mit einer Steuerung des Antriebs des Wendebandes (13) verbunden ist.

4. Vorrichtung nach einem der vorhergehenden Ansprüche,
**dadurch gekennzeichnet, dass** vor der ersten Enthäutungseinheit (3) ein Sensor (4) vorgesehen ist, der die Länge des Behandlungsgutes (2) ermittelt.

5. Vorrichtung nach einem der vorhergehenden Ansprüche,
**dadurch gekennzeichnet, dass** vor der ersten Enthäutungseinheit (3) ein Sensor (5) vorgesehen ist, der die Dicke des Behandlungsgutes (2) ermittelt.

6. Vorrichtung nach einem Ansprüche 3 bis 5, **dadurch gekennzeichnet, dass** als Sensoren (4, 5, 14) Lichtschranken vorgesehen sind.

7. Vorrichtung nach Anspruch 4 und 5, **dadurch gekennzeichnet, dass** ein Antrieb zur Änderung der Neigung des Abschnitts des ersten Abfuhrbandes (12) vorgesehen ist, und dass der Antrieb mit den Sensoren (4, 5) vor der ersten Enthäutungseinheit (3) verbunden ist.

8. Vorrichtung nach Anspruch 4, **dadurch gekennzeichnet, dass** der Sensor (4) mit einer Steuerung für den Antrieb für das Zufuhrband (1) verbunden ist, wobei die Steuerung dafür sorgt, dass der Antrieb unterbrochen wird, wenn das Behandlungsgut den Sensor (4) passiert hat.

9. Vorrichtung nach Anspruch 3 und 8, **dadurch gekennzeichnet, dass** die Steuerung mit dem Sensor (14) an dem Wendeband (13) verbunden ist.

10. Vorrichtung nach einem der vorhergehenden Ansprüche,
**dadurch gekennzeichnet, dass** bei der ersten und/ oder zweiten Enthäutungseinheit (3, 15) eine Druckwalze (8) zum Andrücken des Behandlungsgutes (2) an die Schneideinheit (7) von oben vorgesehen ist, und dass ein Antrieb zur Einstellung der Höhe der Druckwalze (8) über der Schneideinheit (7) vorgesehen ist, wobei der Antrieb mit einem Sensor (5) zur Erkennung der Dicke des Behandlungsgutes verbunden ist.

11. Vorrichtung nach einem der vorhergehenden Ansprüche
**dadurch gekennzeichnet, dass** für das Zufuhrband, das erste Abfuhrband, das Wendeband und das zweite Abfuhrband Antriebe vorgesehen sind, welche die Geschwindigkeiten vorgeben, wobei die Geschwindigkeit in Bearbeitungsrichtung von Band zu Band zunimmt.

12. Vorrichtung nach einem der Ansprüche 2 bis 11, **dadurch gekennzeichnet, dass** das Wendeband (13) und das zweite Abfuhrband (16) unter einer Neigung gegen die Horizontale angeordnet sind, und dass das Niveau des Zufuhrbandes (1) mit dem Niveau des Endes des zweiten Abfuhrbandes (16) zumindest ungefähr übereinstimmt.

13. Vorrichtung nach einem der vorhergehenden Ansprüche,
**dadurch gekennzeichnet, dass** unterhalb der Enthäutungseinheiten (1, 15) Behälter (11) vorgesehen sind zur Aufnahme der von dem Behandlungsgut (2) abgetrennten Fett- und Hautreste (10).

14. Vorrichtung nach einem der Ansprüche 1 bis 12, **dadurch gekennzeichnet, dass** unterhalb der Enthäutungseinheitcn ein Transportband (18, 19, 20) zur Aufnahme und zum Ableiten der von dem Behandlungsgut (2) abgetrennten Fett- und Hautreste (11) vorgesehen ist.

## Claims

1. Device for de-rinding and skinning a product to be treated such as pieces of meat or fish and similar products,
with a first skinning unit (3) consisting of
a cutting unit (7)
and a press roller (6) feeding the product to be treated to the cutting unit (7)
and with a transport unit consisting of
a first removal belt (12) for diverting the product to be treated (2), which is skinned by the first skinning unit (3),
**characterised in that**
a turning belt (13) is provided below the first removal belt (12), onto which the product to be treated (2) can fall from the end of the first removal belt (12) tilted away from the first skinning unit (3),
a drive mechanism of the turning belt (13) is provided, which transports the product to be treated (2) first in a first direction (C) opposite to the transport direction (B) of the first removal belt (12) and then in a second direction (D) identical to the transport direction of the removal belt,
the end of the turning belt (13) seen in the second direction (D) has a second skinning unit (15), and
at least one section of the first removal belt (12) is arranged in a tiltable manner in order to modify the tilt of this removal belt section.

2. Device according to claim 1, **characterised in that** a supply belt (1) feeding the product to be treated (2) to the first skinning unit (3) is provided, and
that a second removal belt (16) feeding the product to be treated (2) away from the second skinning unit (15) is provided.

3. Device according to claim 1 or 2, **characterised in that** the turning belt (13) has a sensor (14) that registers the passing of the product to be treated (2) and **in that** the sensor (14) is connected to a control for the drive mechanism of the turning belt (13).

4. Device according to one of the previous claims, **characterised in that** a sensor (4) that captures the length of the product to be treated (2) is provided before the first skinning unit (3).

5. Device according to one of the previous claims, **characterised in that** a sensor (5) that captures the thickness of the product to be treated (2) is provided before the first skinning unit (3).

6. Device according to one of claims 3 to 5, **characterised in that** photo sensors are provided as sensors (4, 5, 14).

7. Device according to claims 4 and 5, **characterised in that** a drive mechanism for modifying the tilt of the section of the first removal belt (12) is provided and **in that** the drive mechanism is connected to the sensors (4, 5) before the first skinning unit (3).

8. Device according to claim 4, **characterised in that** the sensor (4) is connected to a control for the drive mechanism for the supply belt (1), whereby the control ensures that the drive mechanism is suspended when the product to be treated has passed the sensor (4).

9. Device according to claims 3 and 8, **characterised in that** the control is connected to the sensor (14) on the turning belt (13).

10. Device according to one of the previous claims, **characterised in that** a press roller (8) for pressing the product to be treated (2) against the cutting unit (7) from above is provided on the first and/or second skinning unit (3, 15) and **in that** a drive mechanism is provided for setting the height of the press roller (8) over the cutting unit (7), whereby the drive mechanism is connected to a sensor (5) for recognising the thickness of the product to be treated (2).

11. Device according to one of the previous claims, **characterised in that** drive mechanisms are provided for the supply belt, the first removal belt, the turning belt and the second removal belt, which predetermine the speed, whereby the speed increases in the processing direction from belt to belt.

12. Device according to one of claims 2 to 11, **characterised in that** the turning belt (13) and the second removal belt (16) are arranged in a tilted manner with respect to the horizontal plane and **in that** the level of the supply belt (1) is at least approximately identical to the level of the end of the second removal belt (16).

13. Device according to one of the previous claims, **characterised in that** containers (11) are provided below the skinning units (1, 15) for collecting the fat and skin remains (10) removed from the product to be treated (2).

14. Device according to one of claims 1 to 12, **characterised in that** a transport belt (18, 19, 20) is provided below the cutting units for collecting and diverting the fat and skin remains (11) removed from the product to be treated (2).

## Revendications

1. Dispositif permettant de dépouiller et d'écorcher un produit à traiter tel que des morceaux de viande, de poisson ou similaires,
avec une première unité de dépouillage (3) consistant en
une unité de découpage (7),
un tambour de traction (6) amenant le produit à traiter à l'unité de découpage (7),
et une unité de transport consistant en
une première bande d'enlèvement (12) pour l'évacuation du produit à traiter dépouillé (2) par la première unité de dépouillage (3),
dispositif **caractérisé par le fait que**,
en dessous de la première bande d'enlèvement (12), est prévue une bande de retournement (13) sur laquelle le produit à traiter (2) peut retomber depuis l'extrémité de la première bande d'enlèvement se trouvant à l'opposé de la première unité de dépouillage (3),
qu'est prévu un entraînement de la bande de retournement (13) qui transporte tout d'abord le produit à traiter (2) dans une direction (C) opposée à la direction de transport (B) de la première bande d'enlèvement (12) et, ensuite, dans une deuxième direction (D) qui concorde avec la direction de transport de la bande d'enlèvement,
qu'à l'extrémité de la bande de retournement (13) vu dans la deuxième direction (D), est prévue une deuxième unité de dépouillage (15) et
qu'au minium une section de la première bande d'enlèvement (12) est montée sur des paliers pivotants qui permettent de modifier l'angle d'inclinaison de cette section de la bande d'enlèvement.

2. Dispositif aux termes de la revendication 1, **caractérisé par le fait qu'**est prévue une bande d'alimentation (1) qui amène le produit à traiter (2) à la première unité de dépouillage (3) et
qu'est prévue une deuxième bande d'enlèvement (16) qui éloigne le produit à traiter (2) de la deuxième unité de dépouillage (15).

3. Dispositif aux termes de la revendication 1 ou 2, **caractérisé par le fait que**, sur la bande de retournement (13), est prévu un capteur (14) qui enregistre le passage du produit à traiter (2) et que le capteur (14) est relié à une commande de l'entraînement de la bande de retournement (13).

4. Dispositif aux termes d'une des revendications précédentes, **caractérisé par le fait que**, devant la première unité de dépouillage (3), est prévu un capteur (4) qui calcule la longueur du produit à traiter (2).

5. Dispositif aux termes d'une des revendications précédentes, **caractérisé par le fait que**, devant la première unité de dépouillage (3), est prévu un capteur (5) qui calcule l'épaisseur du produit à traiter (2).

6. Dispositif aux termes d'une des revendications 3 à 5, **caractérisé par le fait que** les capteurs (4, 5, 14) consistent en barrières lumineuses.

7. Dispositif aux termes des revendications 4 et 5, **caractérisé par le fait qu'**un entraînement est prévu pour la modification de l'angle d'inclinaison de la première bande d'enlèvement (12) et que l'entraînement est relié aux capteurs (4, 5) avant la première unité de dépouillage (3).

8. Dispositif aux termes de la revendication 4, **caractérisé par le fait que** le capteur (4) est relié à une commande pour l'entraînement de la bande d'alimentation (1), à l'occasion de quoi la commande garantit que l'entraînement soit interrompu lorsque le produit à traiter est passé à hauteur du capteur (4).

9. Dispositif aux termes des revendications 3 et 8, **caractérisé par le fait que** la commande avec le capteur (14) est reliée à la bande de retournement (13).

10. Dispositif aux termes d'une des revendications précédentes, **caractérisé par le fait que**, à hauteur de la première et/ ou de la deuxième unité de dépouillage (3, 15), est prévu un tambour de pression (8) pour appuyer le produit à traiter (2) de haut en bas contre l'unité de découpage (7) et qu'est prévu un entraînement pour le réglage de la hauteur du tambour de pression (8) au dessus de l'unité de découpage (7), à l'occasion de quoi l'entraînement est relié à un capteur (5) pour l'identification de l'épaisseur du produit à traiter.

11. Dispositif aux termes d'une des revendications précédentes, **caractérisé par le fait que**, pour la bande d'alimentation, la première bande d'enlèvement, la bande de retournement et la deuxième bande d'enlèvement, sont prévus des entraînements qui prescrivent les vitesses, à l'occasion de quoi la vitesse augmente d'une bande à l'autre dans la direction de traitement.

12. Dispositif aux termes d'une des revendications 2 à 11, **caractérisé par le fait que** la bande de retournement (13) et la deuxième bande d'enlèvement (16) sont placées sous un angle d'inclinaison contre l'horizontale et que le niveau de la bande d'alimentation (1) concorde tout au moins approximativement avec le niveau de l'extrémité de la deuxième bande d'enlèvement (16).

13. Dispositif aux termes d'une des revendications précédentes, **caractérisé par le fait que**, sous les unités de dépouillage (1, 15), sont prévus des récipients (11) destinés à recevoir les restes de graisses et de peaux (10) séparés du produit à traiter (2).

14. Dispositif aux termes des revendications 1 à 12, **caractérisé par le fait que**, sous les unités de dépouillage, est prévue une bande de transport (18, 19, 20) pour la réception et l'enlèvement des restes de graisses et de peaux séparés du produit à traiter (2).
